# EUROPÄISCHE PATENTSCHRIFT

(11) **EP 1 351 869 B1**
(45) Veröffentlichungstag und Bekanntmachung des Hinweises auf die Patenterteilung: **03.11.2004**
(21) Anmeldenummer: 02715430.1
(22) Anmeldetag: 15.01.2002
(51) Int. Cl.: B65G 17/06, B23Q 7/14

(54) **FÖRDEREINRICHTUNG**
CONVEYING DEVICE
CONVOYEUR

(30) Priorität: 19.01.2001 DE 10102299
(43) Veröffentlichungstag der Anmeldung: 15.10.2003
(73) Patentinhaber: ZF FRIEDRICHSHAFEN AG, 88038 Friedrichshafen (DE)
(72) Erfinder: SCHÜRMANN, Ralf, 88048 Friedrichshafen (DE)
(86) Internationale Anmeldenummer: PCT/EP2002/000317
(87) Internationale Veröffentlichungsnummer: WO 2002/057160

(56) Entgegenhaltungen:
- FR-A- 1 268 376

## Beschreibung

Die Erfindung betrifft eine Einrichtung zur Förderung von Montagewagen nach dem Oberbegriff von Anspruch 1.

In Fertigung- und Prüfprozessabläufen ist es erforderlich, die Träger der zu fertigenden oder zu prüfenden Bauteile zum Bearbeitungsort oder Prüfort und zwischen diesen Orten zu transportieren. Üblicherweise werden dazu an der Hallendecke hängende Systeme oder Fahrsysteme mit Montagewagen auf dem Hallenboden verwendet. Zur Förderung von Montagewagen sind verschiedene Möglichkeiten bekannt. Unterflurkettenförderer müssen fest im Hallenboden installiert werden und bedürfen eines entsprechend dicken Hallenbodens, um die Zugketten zu verlegen. Die Montagewagen sind an das Kettensystem gebunden und der Verlauf des Förderweges ist durch die Bodeninstallation fest vorgegeben, was das System sehr inflexibel macht. Zudem sind derartige Systeme durch die aufwendigen Arbeiten sehr kostenintensiv. Fahrerlose Transportsysteme bedürfen ebenfalls einer aufwendigen Verlegung von Signalleitungen im Hallenboden. Die Montagewagen benötigen eigene Antriebssysteme und Stromversorgungssysteme, die einer ständigen Aufladung der Batterien und Wartung bedürfen. Die jeweils montagewageneigenen Antriebe laufen jedoch untereinander aufgrund von produktionsbedingten Streuungen nicht synchron, so daß es zu Staus oder einem Auseinanderziehen der Prozesskette kommen kann.

Der Erfindung liegt die Aufgabe zugrunde, eine Einrichtung aufzuzeigen, die flexibel und kostengünstig eine prozesssichere Förderung von Montagewagen sicherstellt.

Die Aufgabe wird gelöst durch eine Einrichtung mit den Merkmalen des Anspruchs 1. Ausgestaltungen sind Gegenstand von Unteransprüchen.

Die Einrichtung zur Förderung von Montagewagen in einer Prozesskette weist eine Vielzahl von Montagewagen und eine Antriebseinrichtung auf. Jeder Montagewagen verfügt über eine Deichsel, durch die die Montagewagen untereinander verbindbar sind. Die Montagewagen werden an einer Führungsschiene mit Hilfe von Führungsbolzen, die lösbar sein können, geführt, wobei die Führungsschiene die Streckenführung des Produktionsprozesses vorgibt. An einer Stelle der Prozesskette treibt nur die eine Antriebseinrichtung lediglich einen der mit den Deichseln untereinander verbundenen Montagewagen an, nämlich den jeweils führenden Montagewagen. Ausgestaltungen weisen an der Antriebseinheit Mitnehmer auf, die in den angetriebenen Montagewagen eingreifen. In einer Ausführungsform ist die Deichsel flexibel am Montagewagen angeordnet, um jeder Streckenführung der Führungsschiene folgen zu können. Eine Ausgestaltung der Einrichtung zeigt die Führungsschiene am Boden befestigt. Die Führungsschiene kann auch in einem Abstand zum Boden angeordnet sein, so daß die Wagen an ihr entlanggleiten können.

Die Erfindung wird anhand einer Zeichnung näher erläutert.

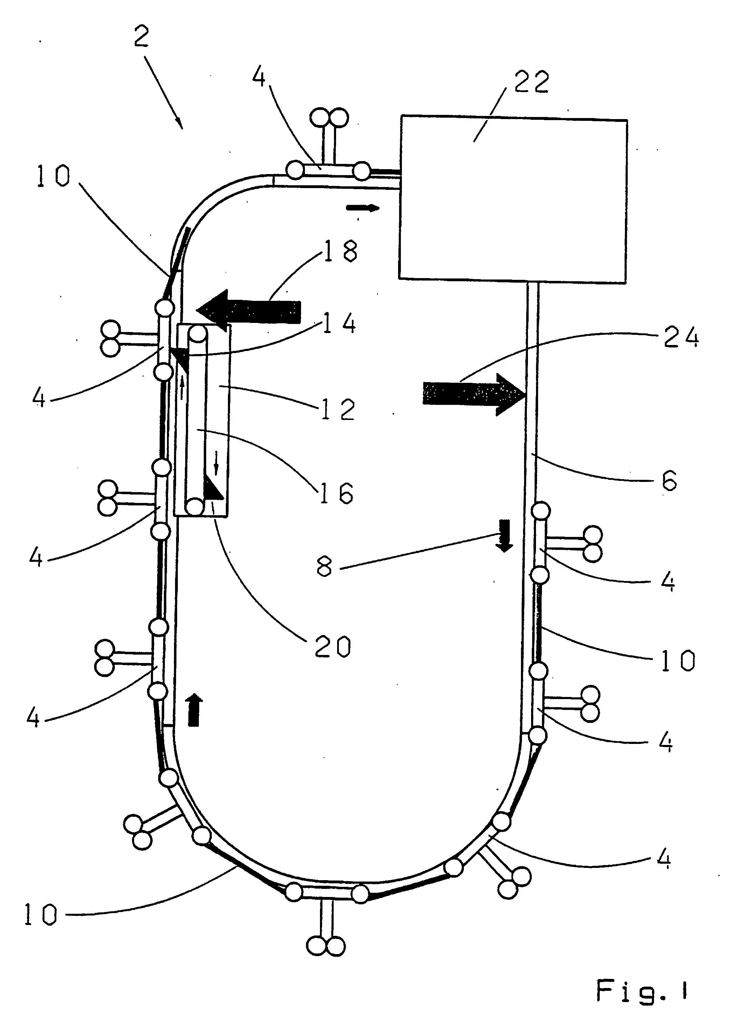

Die Figur zeigt eine Prozesskette mit der Einrichtung 2 zur Förderung von Montagewagen 4. An einer am Boden befestigten Führungsschiene 6 sind eine Reihe von Montagewagen 4 hintereinander in Richtung der Pfeile 8 angeordnet. Die Montagewagen 4 sind so an der Führungsschiene 6 angeordnet, daß sie gezwungen sind, der von der Führungsschiene 6 vorgegebenen Streckenführung zu folgen. Die Montagewagen 4 weisen jeweils eine Deichsel 10 auf, mit der die Montagewagen 4 untereinander verbunden sind. Eine Antriebseinrichtung 12 weist hier zwei Mitnehmer 14, 20 auf, die an einer umlaufenden Führung 16 innerhalb der Antriebseinrichtung 12 so weit voneinander entfernt angeordnet sind, daß jeweils einer der Mitnehmer 14, 20 in einen Montagewagen 4 eingreift. Es können auch mehr als zwei Mitnehmer vorgesehen werden, beispielsweise drei Mitnehmer. Durch die Antriebseinrichtung 12 wird jeweils der führende Montagewagen 4 über den ersten Mitnehmer 14 angetrieben. Verläßt der führende Montagewagen 4 an der Abkoppelstelle 18 die Kette der Montagewagen 4, so wird die Deichsel 10 des folgenden Montagewagens 4 vom führenden Montagewagen 4 abgekoppelt. Der führende Montagewagen 4 steht dadurch als ziehender Montagewagen nicht mehr zur Verfügung. Daher greift dann der zweite Mitnehmer 20 in den folgenden Montagewagen 4 ein und fördert die Kette weiter, während der erste Mitnehmer 14 aus dem führenden Montagewagen 4 ausschert. Der vormals führende Montagewagen 4 wird entkoppelt manuell weiterbewegt, während der vormals nachfolgende Montagewagen 4 nunmehr zum führenden Montagewagen 4 wird. Der manuell bewegte Montagewagen 4 wird hier in einen Prüfstand 22 geschoben, wo weitere Arbeiten vorgenommen werden. An der Einkoppelstelle 24 wird manuell ein neuer Montagewagen 4 an das Ende der Kette der Montagewagen 4 geschoben und dort angehängt, indem seine Deichsel 10 mit dem vormals letzten Montagewagen 4 der Kette verbunden wird. Von dort ab wird er von der Antriebseinrichtung 12 weitergezogen.

Der Ablauf des Prozesses wird nachfolgend nochmals kurz dargestellt. Die vorher von Mitarbeitern geschobenen Montagewagen 4 werden mit Hilfe der lösbaren Deichseln 10 miteinander verkettet und mit einer konstanten Geschwindigkeit durch die Montagelinie gezogen. Die Montagewagen 4 werden in der Führungsschiene 6 in der Spur gehalten. Angetrieben wird immer nur der jeweils führende Montagewagen 4 vor der Abkoppelstelle 18. Nach Durchfahren der Antriebseinheit 12 wird der führende Montagewagen 4 mit dem fertig montierten Bauteil abgekoppelt und in den Prüfstandsbereich 22 weitergeschoben. Nun wird der nachfolgende Montagewagen 4 durch die Antriebseinheit 12 angetrieben und zieht die Kette von Montagewagen 4 durch die Montagelinie. Nach Durchlaufen des Prüfstandes 22 und Abgabe des geprüften Bauteils wird der nun leere Montagewagen 4 wieder am Ende der Kette am letzten Montagewagen 4 angekoppelt.

Die erfinderische Einrichtung zur Förderung von Montagewagen ermöglicht ein kontinuierliches Arbeiten am Montageband. Die gesamten Montagearbeiten werden von der Vormontage über den Kommisionierbereich bis hin zum Prüfstand durch gleichmäßiges Arbeiten am Montageband beruhigt. Ausbringungsschwankungen können dadurch vermieden werden, was zu einer Steigerung der Produktivität führt. Die Einrichtung ist überaus flexibel, wartungsarm und kostengünstig. Die Antriebseinheit der Montagewagen kann innerhalb kurzer Zeit abmontiert und an einer anderen Stelle wieder aufgebaut werden. Eine Erweiterung oder Verkürzung der Montagelinie ist ohne weiteres möglich. Die einzelnen Montagewagen können an ihren Deichseln voneinander gelöst werden und dann vom Bedienpersonal leicht an eine beliebige Position auch außerhalb der Führungsschiene oder der Prozesskette geschoben werden, weil die Montagewagen unabhängig von der Antriebseinheit sind und selbst auf ihren Rädern auf dem Boden rollen können.

## Patentansprüche

1. Einrichtung (2) zur Förderung von Montagewagen (4) in einer Prozesskette mit einer Vielzahl von Montagewagen (4) und einer Antriebseinrichtung (12), wobei jeder Montagewagen (4) eine Deichsel (10) aufweist, durch die die Montagewagen (4) untereinander verbindbar sind, die Montagewagen (4) an einer Führungsschiene (6) geführt werden, und dass an einer Stelle der Prozesskette,die eine Antriebseinrichtung (12) lediglich einen der mit den Deichseln (10) untereinander verbundenen Montagewagen (4) antreibt, **dadurch gekennzeichnet, dass** die Antriebseinrichtung (12) den führenden Montagewagen (4) zu einer Abkoppelstelle (18) transportiert, wo der führende Montagewagen (4) abgekoppelt, einer Arbeitsstation bspw. in Form eines Prüfstandes (22) zugeführt und an einer Einkoppelstelle (24) wieder in die Einrichtung (2) zur Förderung von Montagewagen (4) integriert wird, wobei nur der jeweils führende Montagewagen (4) angetrieben wird.

2. Einrichtung (2) nach Anspruch 1, **dadurch gekennzeichnet, dass** an der Antriebseinheit (12) Mitnehmer (14, 20) vorgesehen sind, die in den angetriebenen Montagewagen (4) eingreifen.

3. Einrichtung (2) nach Anspruch 1 oder 2, **dadurch gekennzeichnet, dass** die Deichsel (10) flexibel am Montagewagen (4) angeordnet ist, um jeder Streckenführung der Führungsschiene (6) folgen zu können.

4. Einrichtung (2) nach einem der Ansprüche 1 bis 3, **dadurch gekennzeichnet, dass** die Führungsschiene (6) am Boden befestigt ist.

## Claims

1. Installation (2) for conveying assembly cars (4) in a process chain with a multitude of assembly cars (4) and a driving element (12), with each assembly car (4) featuring a drawbar (10), by means of which the assembly cars (4) can be coupled, with the assembly cars (4) being guided by a guide rail (6), and that in one place of the process chain the driving element (12) drives only one of the assembly cars linked by drawbars (10) with each other, **characterized in that** the driving element (12) conveys the leading assembly car (4) to a decoupling point (18), where the leading assembly car (4) is decoupled, conveyed to a workstation, for example in the form of a test bench (22), and at a coupling point (24) is reintegrated into the installation (2) for conveying assembly cars (4), with only the leading assembly car (4) in each case being driven.

2. Installation (2) according to claim 1, **characterized in that** the driving unit (12) features drivers (14, 20) which mesh with the driven assembly car (4).

3. Installation (2) according to claim 1 or 2, **characterized in that** the drawbar (10) is flexibly arranged on the assembly car (4), so that any routing of the guide rail (6) can be followed.

4. Installation (2) according to one of the claims 1 through 3, **characterized in that** the guide rail (6) is fixed to the floor.

## Revendications

1. Dispositif (2) pour le transport de chariots de montage (4) dans une chaîne de processus comportant une pluralité de chariots de montage (4) et un dispositif d'entraînement (12), dans lequel chaque chariot de montage (4) comporte un timon (10) par lequel les chariots de montage (4) peuvent être reliés entre eux, les chariots de montage (4) étant guidés le long d'un rail de guidage (6) et en ce que, à un endroit de la chaîne de processus, l'unique dispositif d'entraînement (12) entraîne seulement l'un des chariots de montage (4) qui sont reliés entre eux par les timons (10), **caractérisé en ce que** le dispositif d'entraînement (12) transporte le chariot de montage (4) de tête jusqu'à un poste de désaccouplement (18) où le chariot de montage (4) de tête est désaccouplé, acheminé à une station de travail, par exemple constituée par un banc de contrôle (22), et, dans un poste d'accouplement (24), de nouveau intégré dans le dispositif (2) de transport de chariots de montage (4), seul le chariot de montage (4) qui se trouve en tête étant entraîné.

2. Dispositif (2) selon la revendication 1, **caractérisé en ce que** des taquets d'entraînement (14, 20) qui s'engagent dans le chariot de montage (4) entraîné sont prévus dans l'unité d'entraînement (12).

3. Dispositif (2) selon la revendication 1 ou 2, **caractérisé en ce que** le timon (10) est disposé de façon flexible sur le chariot de montage (4) afin de pouvoir suivre chaque tracé du rail de guidage (6).

4. Dispositif (2) selon l'une des revendications 1 à 3, **caractérisé en ce que** le rail de guidage (6) est fixé au sol.
